# FASCICULE DE BREVET EUROPEEN

(11) **EP 0 848 153 B1**
(45) Date de publication et mention de la délivrance du brevet: **31.03.2004**
(21) Numéro de dépôt: 97402997.7
(22) Date de dépôt: 11.12.1997
(51) Int. Cl.: F02K 1/70

(54) **Inverseur de poussée de turboréacteur à portes comportant des aubes déflectrices associées à la structure fixe**
Schubumkehrvorrichtung für ein Strahltriebwerk mit Umlenkklappen und an der festen Trägerstruktur behalteten Leitflächen
Thrust reverser for a jet engine with blockdoors and deflector vanes linked to the fixed frame

(30) Priorité: 12.12.1996 FR 9615256
(43) Date de publication de la demande: 17.06.1998
(73) Titulaire: Hurel-Hispano, 76700 Gonfreville l'Orcher (FR)
(72) Inventeur: Gonidec, Patrick, 76290 Montivilliers (FR); Rouyer, Pascal Gérard, 76430 Saint Aubin Routot (FR); Vauchel, Guy Bernard, 76610 Le Havre (FR)
(74) Mandataire: Chevalier, Renaud Philippe

(56) Documents cités:
- EP-A- 0 338 869
- EP-A- 0 352 171
- EP-A- 0 365 425
- EP-A- 0 413 635
- FR-A- 2 680 547

## Description

La présente invention concerne un dispositif d'inversion de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autres cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la traînée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

Nous appellerons capotage extérieur l'ensemble constitué par la paroi extérieure de la nacelle.

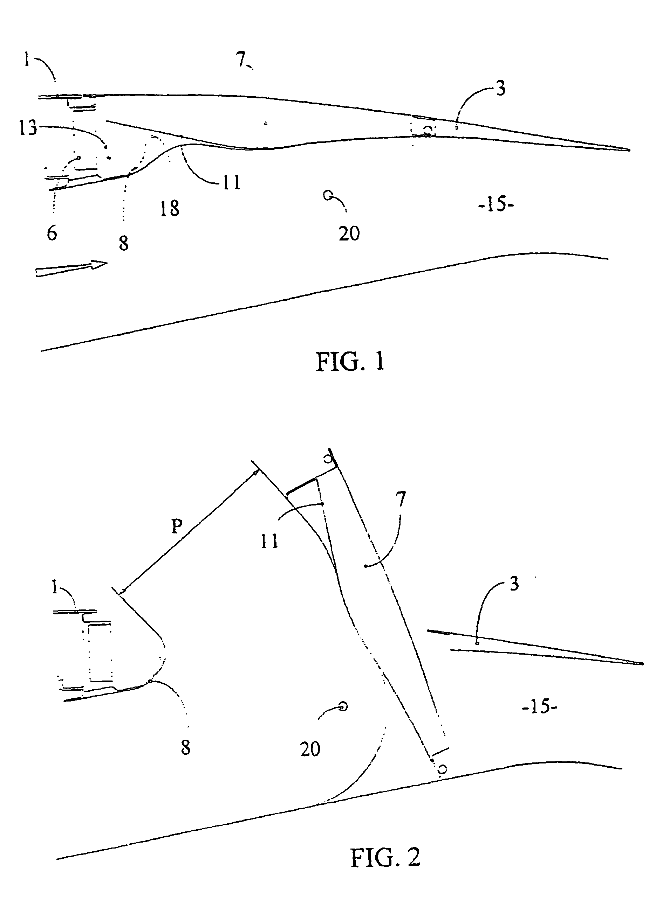

La figure 1 des dessins joints montre un exemple connu de réalisation d'un inverseur de poussée de ce type, appliqué à un turboréacteur à double flux.

Le dispositif d'inversion est constitué de portes 7 formant une partie mobile et constituant en position inactive, lors d'un fonctionnement en jet direct, une partie du capotage extérieur, et d'une structure fixe réalisant ce capotage extérieur en amont des portes, par une partie amont 1 puis en aval des portes par une partie aval 3 et entre les portes 7 par l'intermédiaire de poutres qui relient la partie aval 3 du capotage extérieur à la partie amont 4 du capotage extérieur. Les portes 7 sont montées sur une circonférence du capotage extérieur et sont montées pivotantes en 20 dans une zone intermédiaire de leurs parois latérales sur les poutres situées de part et d'autre de ces portes, ces parois latérales constituant avec les parois amont et aval, les parois qui relient la partie extérieure 9 des portes 7, qui constituent une partie de la paroi extérieure de la nacelle, à la partie intérieure 11 des portes 7, qui constituent une partie de la paroi extérieure du conduit.

La partie amont 1 de structure fixe comporte un cadre avant 6 qui sert de support aux moyens de commande des déplacements des portes 7, constitués par exemple par des vérins.

En position activée, représentée sur la figure 2, les portes 7 basculent de telle façon que la partie des portes situées en aval des pivots, vient obstruer plus ou moins totalement le conduit, et de telle façon que la partie amont des portes vient dégager un passage dans le capotage extérieur de manière à permettre au flux secondaire d'être canalisé radialement par rapport à l'axe du conduit. La partie amont des portes 7 fait saillie à l'extérieur du capotage extérieur pour des raisons de dimensionnement du passage qui doit être capable de laisser passer ce flux sans compromettre le fonctionnement du moteur. L'angle de pivotement des portes est ajusté de manière à permettre le passage du flux et de manière à supprimer la poussée de ce flux, voire à commencer à générer une contre poussée en générant une composante du flux dévié vers l'amont.

Les portes 7 sont également munies dans leur partie amont d'un becquet 13 faisant saillie vers l'avant, lorsque les portes 7 sont déployées, par rapport à la face interne des portes, de manière à dévier le flux vers l'amont et achever d'obtenir la composante de contre poussée.

Des exemples connus de réalisation sont illustrés par exemple par FR 1 482 538 ou par FR-A-2 030 034.

Il existe aussi des dispositifs tels que celui décrit par US 3 605 411 qui permettent d'avoir une saillie de becquet vers l'amont lorsque les portes sont déployées tout en permettant une continuité de la paroi externe du conduit lorsque les portes ne sont pas déployées. On connaît également par FR-A-2 618 853 un dispositif où le becquet est escamoté en jet direct de façon à optimiser les performances du moteur.

Dans certaines applications, comme représenté sur la figure 1, les becquets 13 font saillie par rapport à la face interne 11 des portes 7, même en jet direct sans pour autant faire saillie dans le conduit qui est dans cet exemple muni de cavités légèrement préjudiciables aux performances du moteur alors que le dispositif d'inversion devient extrêmement simple.

La combinaison des becquets et des bords de déviation permettent également d'optimiser la direction d'éjection du flux comme indiqué par FR-A-2 680 547.

Enfin la commande des portes d'une position à une autre par vérin est connue en soi, nous noterons cependant la solution très simple où il y a un vérin par porte fixé dans sa partie amont à la structure fixe amont du capotage extérieur, et dans sa partie aval à la porte en un point situé dans la partie amont comme décrit par exemple par FR 1 482 538.

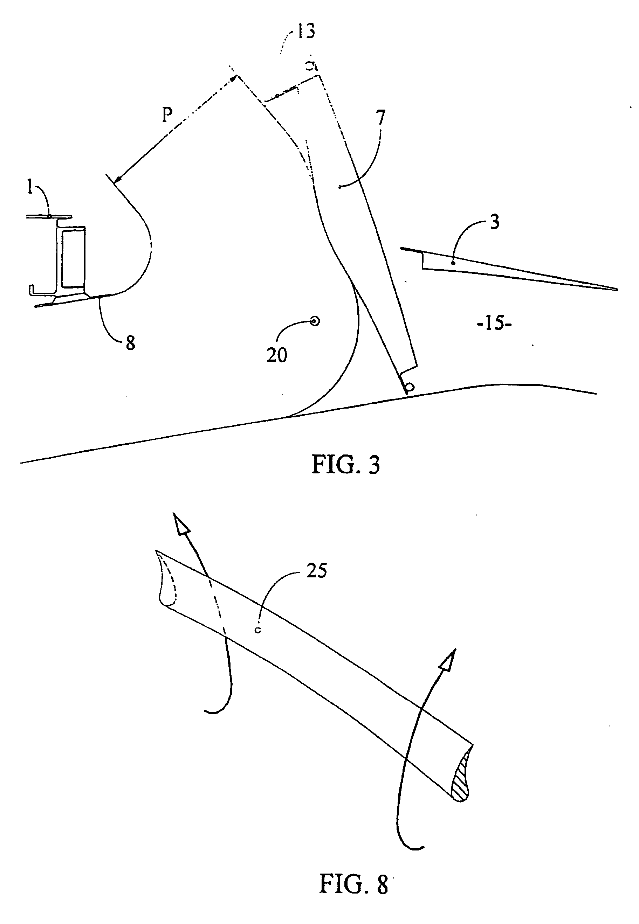

Selon les figures 1 et 2, la porte 7 comporte une cavité 18 formée par la paroi interne 11 de la porte 7, nécessaire pour obtenir les performances aérodynamiques en mode d'inversion, ceci dans le cas d'utilisation de becquet fixe 13 sur la porte 7.
Le bord de déviation 8 est rond pour permettre un meilleur contournement par le flux et ainsi obtenir une longueur de section efficace "P" optimale, en mode d'inversion, mais cette définition génère des pertes aérodynamiques néfastes au rendement du moteur en mode jet direct car le flux circulant dans le canal annulaire 15 est dirigé dans la cavité 18.
Dans certaines applications et comme représenté sur la figure 3, selon une solution connue en soi, pour minimiser ces pertes, un bord de déviation 8 plat en amont, recouvre une partie de la cavité ; le flux est mieux dirigé et évite une partie de la cavité en mode jet direct et ainsi les perturbations s'en trouvent réduites.
Le problème de l'utilisation d'un tel bord de déviation est, qu'en jet inversé, le flux ne peut plus suivre le rayon évoqué précédemment et le contournement du bord de déviation par le flux se fait beaucoup plus loin et réduit d'autant la longueur de section efficace "P", ce qui oblige, pour obtenir la même efficacité qu'avec un bord de déviation rond, d'augmenter la distance entre ledit bord de déviation et la face interne 11 de la porte 7 sur laquelle le flux vient en contact en mode d'inversion.
Il convient d'ajouter que le fait d'augmenter cette distance est préjudiciable pour la tendance à l'équilibrage de la porte car le pivot 20 doit être reculé vers l'aval de la nacelle, augmentant d'autant la partie interne 11 en amont du pivot 20 de la porte 7 sur laquelle le flux exerce son action d'aide à l'ouverture. On connaît également par EP-A-0 338 869 un inverseur de poussée de turboréacteur dans lequel un élément en forme de lèvre est placé à la base du bord de déviation de la partie amont fixe de l'inverseur de manière à éviter les perturbations d'écoulement aux limites de veine en jet direct.
Un des buts de l'invention est d'utiliser un bord de déviation plat, en conservant, en jet inversé, une distance entre l'aval du bord de déviation et la face interne de la porte la plus réduite possible tout en assurant les performances aérodynamiques d'inversion. On vise en outre à réduire le déséquilibrage de la porte en jet direct en minimisant la longueur de la partie amont de la porte par rapport à son point pivot.
Les buts sont atteints conformément à l'invention par un inverseur de poussée à portes pivotantes du type précité caractérisé en ce que au moins une pièce profilée comportant au moins une courbure dans le sens transversal de l'inverseur reliée à la structure fixe de l'inverseur et formant une aube déflectrice est disposée dans une position fixe, en aval dudit bord de déviation, écartée à une distance adaptée à assurer l'orientation optimale du flux d'inversion et est contenue dans l'épaisseur du capotage extérieur, dans la cavité créée sous la partie amont du panneau interne de la porte en jet direct, de manière à améliorer l'orientation du flux d'inversion.
D'autres caractéristiques et avantages de l'invention seront mieux compris à la lecture de la description qui va suivre d'un mode de réalisation de l'invention, en référence aux dessins annexés sur lesquels :
- la figure 1 représente une demi-vue schématique, en coupe longitudinale par un plan passant par l'axe de rotation d'un turboréacteur associé, d'un inverseur de poussée à portes pivotantes, en position fermée, d'un type connu et qui a fait précédemment l'objet d'une description .
- la figure 2 représente en mode jet inversé la direction du flux pour un inverseur à portes associé à un bord de déviation rond.
- la figure 3 représente en mode jet inversé la direction du flux pour un inverseur à portes associé à un bord de déviation plat.
- la figure 4 représente un mode de l'invention dans une vue identique à la figure 1 en position fermée.
- la figure 5 représente le mode de l'invention de la figure 4 représenté en jet inversé.
- la figure 6 montre dans une vue transversale un exemple du mode de réalisation l'invention de forme parallèle à la ligne externe de la veine.
- la figure 7 montre dans une vue transversale un exemple du mode de réalisation l'invention de forme non parallèle à la ligne externe de la veine.
- la figure 8 représente un exemple de réalisation de l'invention, en perspective, de forme antagoniste.
- les figures 9 et 10 représentent un mode de réalisation de l'invention en position jet direct et inversé.
- la figure 11 représente une vue partielle d'un exemple de butée réglable associée au mode de l'invention.
- la figure 12 représente un autre mode de réalisation de l'invention en mode jet inversé.
- les figures 13 et 14 représentent un mode d'articulation de panneau amont associé au mode de réalisation de l'invention.

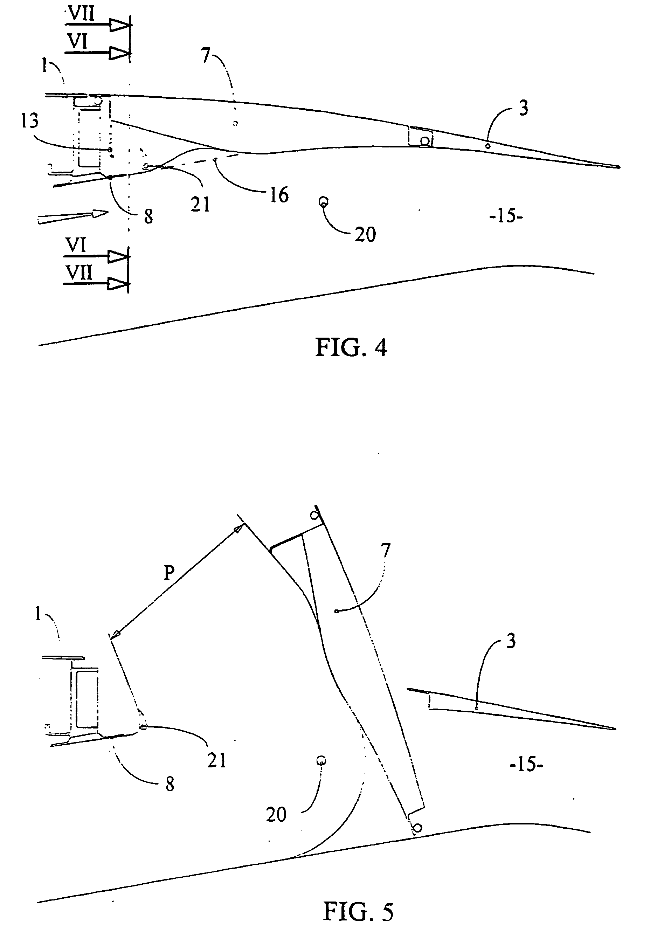

La figure 4 représente un mode de réalisation de l'invention. Elle se compose d'une pièce profilée 21 que l'on appellera aube déflectrice se situant dans la cavité 18 créée par le panneau interne 11 de la porte 7 en jet direct.
Selon les effets aérodynamiques en jet direct recherchés :
Son profil peut être situé, à la limite du profil de la ligne théorique 16 de délimitation aérodynamique de la veine secondaire 15 de circulation des gaz constituant le flux secondaire ou, à l'intérieur de la cavité à une distance du profil 16, définie par l'homme de métier, assurant une aide pour l'orientation du flux en jet inversé sans perturber le flux en jet direct.

L'aube déflectrice 21 se situe en aval de l'extrémité aval du bord de déviation 8. La distance entre l'aube déflectrice et le bord de déviation et la ligne théorique 16 est définie pour optimiser les performances aérodynamiques tout en évitant la zone perturbée dans la cavité 18 en jet direct.

L'aube déflectrice 21 a un profil aérodynamique adapté pour le but recherché. Sa forme, sa taille, son orientation et sa position peuvent évoluer sur une même pièce suivant la nécessité. Un même type d'aube peut être utilisé par cavité de porte, être différent d'une cavité de porte 7 à une autre ou bien même ne pas être utilisé dans toutes les cavités de porte d'un même inverseur. Une même aube peut être réalisée en éléments juxtaposés, indépendant ou non et ayant ou non des calages et des géométries différents.

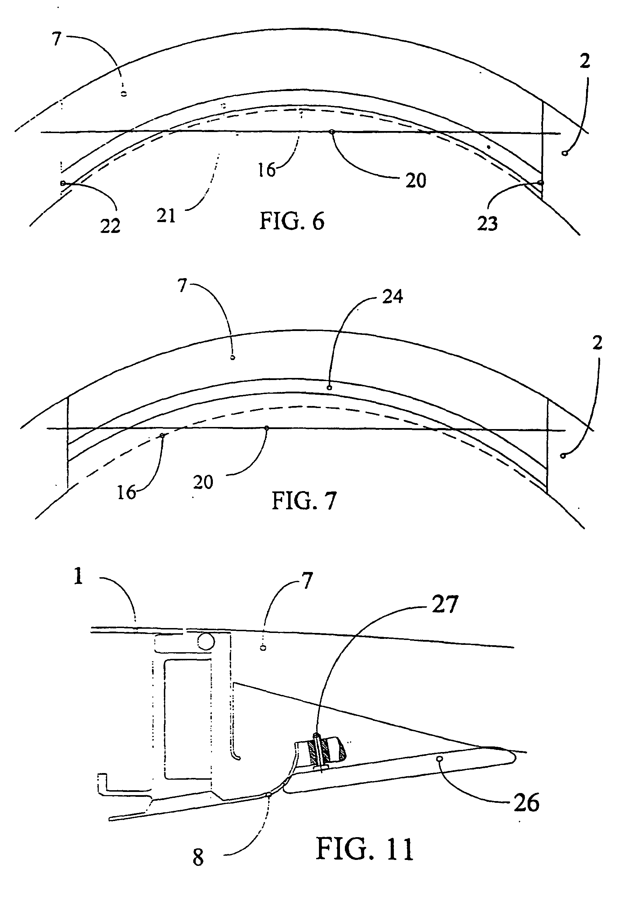

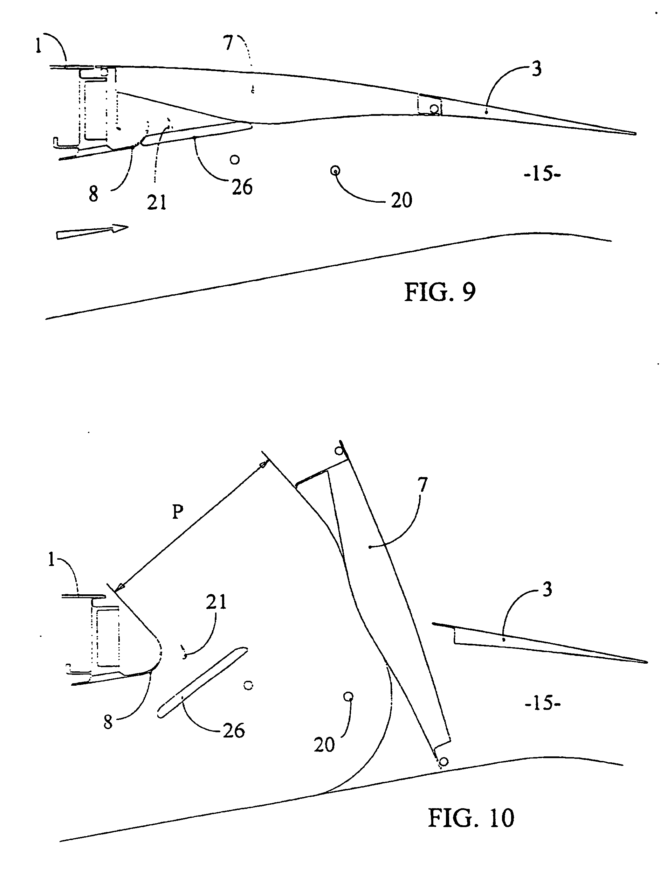

L'aube déflectrice 21 peut être utilisée sur toute la largeur du passage dans le capotage extérieur de la nacelle ou puits d'éjection, les jonctions 22 et 23 se faisant sur les parois ou dans les zones latérales des poutres 2 par exemple (Fig 6 et 7).
Il est à noter que l'aube déflectrice peut ne concerner qu'une partie radiale du puits d'éjection et être reliée soit au bord de déviation 8 soit sur le cadre 6 ou à tout autre endroit de la nacelle que l'homme de métier jugerait optimal pour son maintien par un support adapté.

La zone partielle peut couvrir un champ s'étendant d'un bord latéral à son autre extrémité définie ou se trouver dans une partie comprise entre les deux bords latéraux 22 et 23 du puits d'éjection.

La distance entre le profil de l'aube déflectrice 21 et la ligne théorique 16 peut être constante comme le montre la figure 6 ou évolutive comme le montre un exemple de représentation de l'aube déflectrice 24 sur la figure 7.
La forme d'ailette de l'aube déflectrice 25, dont la courbure aide à diriger le flux vers l'amont de la nacelle en jet inversé peut, sur une même pièce et à des endroits pertinents définis par l'homme de métier, être inversé comme montré en exemple sur la figure 8 et de ce fait diriger le flux dans une direction opposée.

Une seule aube déflectrice peut être utilisée par cavité 18 mais il est à noter que le nombre d'aubes déflectrices n'est pas limité. Ainsi plusieurs aubes déflectrices peuvent être installées dans une même cavité 18 suivant tous les paramètres déja cités, aussi bien entre les aubes déflectrices d'une même cavité elles-mêmes, qu'entre les différents puits d'éjection. Ces différentes aubes peuvent être reliées entre elles, soit indépendamment, soit associées avec n'importe quel élément de la structure fixe 1. Ces liaisons peuvent avoir les mêmes caractéristiques géométriques que pour les aubes pour les associer au guidage des nappes.

Le principe peut être employé avec le bord de déviation rond si l'aube déflectrice est positionnée par exemple dans une zone de la cavité 18 non perturbée par le flux circulant dans le canal annulaire 15 en jet direct. Ce paramètre, en jet inversé peut encore améliorer les performances aérodynamiques obtenues déjà par le profil rond du bord de déviation.

Selon un autre mode de l'invention représenté sur les figures 9 et 10, l'aube déflectrice 21, en plus de sa fonction de redresseur de flux en jet inversé, peut servir de butée d'élément mobile comme par exemple un panneau amont 26.
En effet, le panneau amont forme une partie de la veine externe du canal annulaire 15 de la nacelle et subit sur sa partie interne la résultante de pression du flux en jet direct qui peut, dans certain domaine de vol de l'avion, déformer le panneau ne lui permettant plus de tenir les lignes externes admissibles de la veine et générer des pertes aérodynamiques.
Dans ce cas le panneau mobile peut reposer en jet direct sur tout ou une partie de la ou des aubes déflectrices 21.

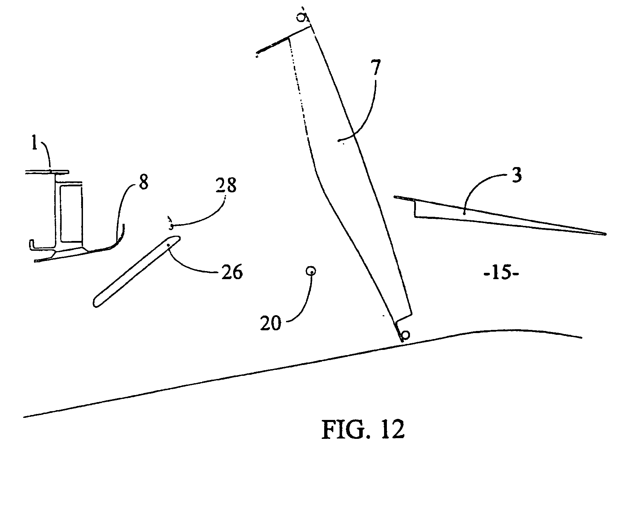

La figure 11 donne un exemple de butée réglable 27 associée à une ou des aubes déflectrices et/ou le bord de déviation 8. Il est à noter que cette fonction peut être réalisée indépendamment des aubes. Une potence montée sur la structure fixe 1 peut contenir l'élément de réglage et ainsi ne pas perturber les effets aérodynamiques recherchés par les aubes.

La figure 12 montre une autre application de l'invention. L'aube déflectrice 28 peut être positionnée de telle sorte qu'elle prolonge l'élément mobile 26, ici représenté par un panneau amont 26. Ainsi positionnée, celle-ci collabore à améliorer l'efficacité de l'inversion du flux.

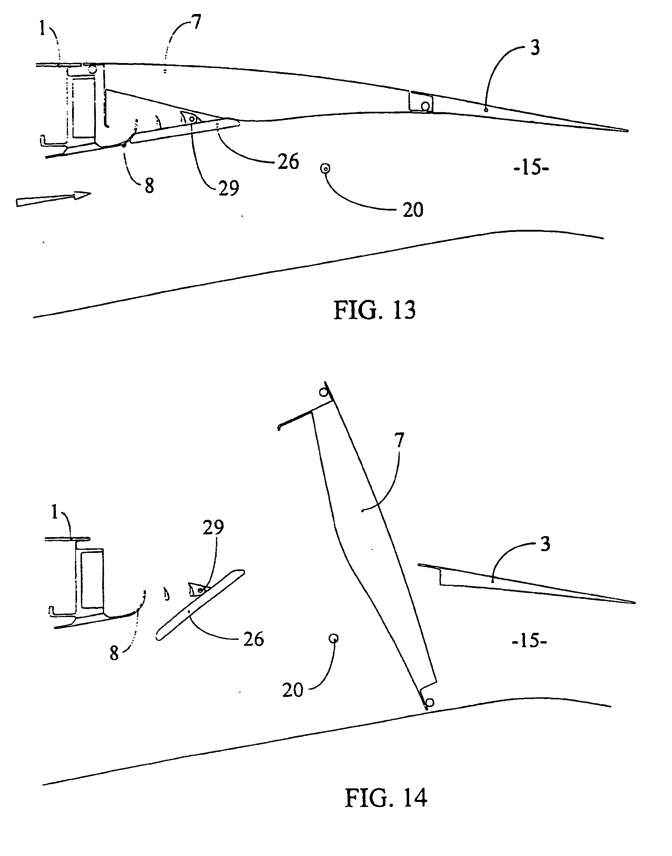

Une autre caractéristique remarquable de l'invention représentée sur les figures 13 et 14 est d'utiliser la structure d'une des aubes et de lui associer des pivots 29 autour duquel s'articule un panneau amont 26 basculant par l'amont dans la veine 15. L'entraînement de celui-ci étant de type connu en soi par l'homme de métier ou les pivots 29 étant positionnés de telle sorte que la cinématique du panneau et leurs emplacements procurent à la fonction la meilleure efficacité recherchée.

## Revendications

1. Inverseur de poussée de turboréacteur à double flux comportant des portes pivotantes (7) en position fermée, lors d'un fonctionnement en jet direct, de s'intégrant dans la paroi extérieure du conduit (15) de flux en arrière de la soufflante de turboréacteur et en outre chacune pivotant sous l'action d'un moyen de commande des déplacements de manière à constituer des obstacles de déviation de flux lors d'un fonctionnement en inversion de poussée, le passage du flux inversé à travers ladite paroi extérieure étant délimité du côté amont par un bord de déviation (8) solidaire de la partie amont de structure fixe (1) d'inverseur **caractérisé en ce qu'**au moins une pièce profilée (21 ; 24 ; 25 ; 28 ) comportant au moins une courbure dans le sens transversal de l'inverseur reliée à la structure fixe de l'inverseur et formant une aube déflectrice est disposée dans une position fixe, en aval dudit bord de déviation, écartée à une distance adaptée à assurer l'orientation optimale du flux d'inversion et est contenue dans l'épaisseur du capotage extérieur, dans la cavité (18) créée sous la partie amont du panneau interne (11) de la porte (7) en jet direct.

2. Inverseur de poussée de turboréacteur à double flux selon la revendication 1 dans lequel ladite aube déflectrice (21) a un profil aérodynamique uniforme.

3. Inverseur de poussée de turboréacteur à double flux selon la revendication 1 dans lequel le profil aérodynamique de ladite aube déflectrice (24 ; 25) est évolutif.

4. inverseur de poussée de turboréacteur à double flux selon l'une quelconque des revendications 1 à 3 dans lequel ladite aube déflectrice (21) relie un bord du puits d'éjection du flux inversé au bord opposé.

5. Inverseur de poussée de turboréacteur à double flux selon l'une quelconque des revendications 1 à 3 dans lequel ladite aube déflectrice (21) occupe une partie de la largeur du puits d'éjection du flux inversé.

6. Inverseur de poussée de turboréacteur à double flux selon l'une quelconque des revendications 1 à 5 dans lequel la porte (7) d'inverseur est associée à un panneau mobile (26) assurant au flux de jet direct une ligne aérodynamique continue de veine fluide et ladite aube déflectrice (21) forme une butée de renfort dudit panneau mobile (26).

7. Inverseur de poussée de turboréacteur à double flux selon la revendication 6 dans lequel ladite aube déflectrice (21) porte au moins un élément (27) formant une butée réglable de renfort dudit panneau mobile.

8. Inverseur de poussée de turboréacteur à double flux selon l'une quelconque des revendications 1 à 7 dans lequel ladite aube déflectrice (21) est soutenue par une potence solidaire de la structure fixe (1,6,8) de l'inverseur.

9. Inverseur de poussée de turboréacteur à double flux selon l'une quelconque des revendications 1 à 5 dans lequel la porte (7) d'inverseur est associée à un panneau mobile (26) assurant au flux de jet direct une ligne aérodynamique continue de veine fluide et ladite aube déflectrice (28) est disposée dans la position d'inversion de poussée, dans le prolongement et en continuité de ligne avec ledit panneau mobile.

10. Inverseur de poussée de turboréacteur à double flux selon l'une des revendications 6 ou 7 dans lequel au moins une desdites aubes déflectrices porte un pivot (29) autour duquel s'articule ledit panneau mobile (26).

## Patentansprüche

1. Schubumkehrvorrichtung für ein Zweikreisturbotriebwerk, welches schwenkbare Klappen (7) aufweist, die bei Direktstrahlbetrieb in geschlossener Stellung befindlich und geeignet sind, sich in die Außenwand des Kanals (15) des Stroms hinter dem Triebwerkbläser des Turbotriebwerks zu integrieren, wobei jede unter der Wirkung einer Steuervorrichtung der Bewegungen in der Weise kippt, dass Hindernisse für die Umlenkung der Ströme gebildet werden, wenn ein Schubumkehrbetrieb stattfindet, wobei das Durchtreten des umgekehrten Stroms durch die genannte Außenwand auf der vorderen Seite durch eine Umlenkkante (8) begrenzt wird, welche mit dem vorderen Teil der festen Struktur (1) einer Schubumkehrvorrichtung fest verbunden ist, **dadurch gekennzeichnet**, das mindestens ein Profilelement (21; 24; 25; 28), welches mindestens eine Krümmung in einer Richtung quer zur Schubumkehrvorrichtung aufweist, mit dem festen Aufbau der Schubumkehrvorrichtung verbunden ist und eine Umlenkschaufel bildet, in einer festen Position, stromab von der genannten Umlenkkante, in einem für die Sicherstellung einer optimalen Ausrichtung des Schubumkehrstroms geeigneten Abstand und innerhalb der Wandstärke Außenverkleidung liegend in der Auskehlung (18), die im Direktstrahlbetrieb unter dem vorderen Teil der Innenfläche (11) der Klappe (7) gebildet wird, angeordnet ist.

2. Schubumkehrvorrichtung für ein Zweikreisturbotriebwerk nach Anspruch 1, **dadurch gekennzeichnet, dass** die genannte Umlenkschaufel (21) ein einheitliches aerodynamisches Profil hat.

3. Schubumkehrvorrichtung für ein Zweikreisturbotriebwerk nach Anspruch 1, **dadurch gekennzeichnet, dass** das aerodynamische Profil der genannten Umlenkschaufel (24; 25) variabel ist.

4. Schubumkehrvorrichtung für ein Zweikreisturbotriebwerk nach einem der Ansprüche 1 bis 3, **dadurch gekennzeichnet, dass** die genannte Umlenkschaufel (21) eine Kante der Ausstoßschächte des Umkehrstroms mit der gegenüberliegenden Kante verbindet.

5. Schubumkehrvorrichtung für ein Zweikreisturbotriebwerk nach einem der Ansprüche 1 bis 3, **dadurch gekennzeichnet, dass** die genannte Umlenkschaufel (21) einen Teil der Länge der Ausstoßschächte des Umkehrstroms einnimmt.

6. Schubumkehrvorrichtung für ein Zweikreisturbotriebwerk nach einem der Ansprüche 1 bis 5, **dadurch gekennzeichnet, daß** die Klappe (7) der Umkehrvorrichtung mit einer beweglichen Platte (26) verbunden ist und damit im Direktstrahlbetrieb eine kontinuierliche aerodynamische Linie des Stromfadens sicherstellt und dass die genannte Umlenkschaufel (21) einen Anschlag zur Verstärkung der genannten beweglichen Platte (26) bildet.

7. Schubumkehrvorrichtung für ein Zweikreisturbotriebwerk nach Anspruch 6, **dadurch gekennzeichnet, dass** die genannten Umlenkschaufel (21) mindestens ein einen einstellbaren Anschlag bildendes Element (27) zur Verstärkung der genannten beweglichen Platte trägt.

8. Schubumkehrvorrichtung für ein Zweikreisturbotriebwerk nach einem der Ansprüche 1 bis 7, **dadurch gekennzeichnet, dass** die genannte Umlenkschaufel (21) von einem mit dem festen Aufbau (1, 6, 8) der Umkehrvorrichtung fest verbundenen Träger gehalten wird.

9. Schubumkehrvorrichtung für ein Zweikreisturbotriebwerk nach einem der Ansprüche 1 bis 5, **dadurch gekennzeichnet, dass** die Klappe (7) der Umkehrvorrichtung mit einer beweglichen Platte (26) verbunden ist und damit im Direktstrahlbetrieb eine kontinuierliche aerodynamische Linie des Stromfadens sicherstellt und dass die genannte Umlenkschaufel (28) in Schubumkehrposition in Verlängerung und in Fortsetzung der Linie mit der genannten beweglichen Platte angeordnet ist.

10. Schubumkehrvorrichtung für ein Zweikreisturbotriebwerk nach einem der Ansprüche 6 oder 7, **dadurch gekennzeichnet, dass** mindestens eine der genannten Umlenkschaufeln einen Drehzapfen (29) aufweist, um den sich die genannte bewegliche Platte (26) bewegt.

## Claims

1. Thrust reverser for a ducted fan turbojet engine with hinge-mounted doors (7) integrated in the internal wall of the flow duct (15) to the rear of the fan of the turbojet engine in a closed position during direct thrust operation, each of which pivots when activated by a means for controlling displacements so as to present an obstacle intended to divert the flow during reverse thrust operation, the passage for the reversed flow extending through said exterior wall being bounded at the upstream side by a deflector edge (8) integral with the upstream part of a fixed structure (1) of the reverser, **characterised in that** at least one contoured piece (21; 24; 25; 28) having at least a curvature in the transverse direction of the reverser, linked to the fixed structure of the reverser and forming a deflector vane, is disposed in a fixed position downstream of said deflector edge, spaced at a distance which is adapted in order to guarantee optimal orientation of the thrust reversing flow and contained in the thickness of the exterior fairing, in the cavity (18) created underneath the upstream part of the internal panel (11) of the door (7) during direct thrust mode.

2. Thrust reverser for a ducted fan turbojet engine as claimed in claim 1, in which said deflector vane (21) has a uniform aerodynamic contour.

3. Thrust reverser for a ducted fan turbojet engine as claimed in claim 1, in which the aerodynamic contour of said deflector vane (24; 25) varies.

4. Thrust reverser for a ducted fan turbojet engine as claimed in any one of claims 1 to 3, in which said deflector vane (21) links one edge of the ejection well for the reversed flow to the opposite edge.

5. Thrust reverser for a ducted fan turbojet engine as claimed in any one of claims 1 to 3, in which said deflector vane (21) occupies a part of the width of the ejection well for the reversed flow.

6. Thrust reverser for a ducted fan turbojet engine as claimed in any one of claims 1 to 5, in which the door (7) of the reverser co-operates with a mobile panel (26) to ensure that the flow in direct thrust mode follows a continuous aerodynamic fluid flow line and said deflector vane (21) serves as a reinforcing stop of said mobile panel (26).

7. Thrust reverser for a ducted fan turbojet engine as claimed in claim 6, in which said deflector vane (21) has at least one element (27) forming an adjustable reinforcing stop for said mobile panel.

8. Thrust reverser for a ducted fan turbojet engine as claimed in any one of claims 1 to 7, in which said deflector vane (21) is supported by an arm integral with the fixed structure (1, 6, 8) of the reverser.

9. Thrust reverser for a ducted fan turbojet engine as claimed in any one of claims 1 to 5, in which the reverser door (7) co-operates with a mobile panel (26) to ensure that the flow in direct thrust mode follows a continuous aerodynamic fluid flow line and, in the thrust reversing position, said deflector vane (28) is disposed in the extension of and affords continuity of the line in conjunction with said mobile panel.

10. Thrust reverser for a ducted fan turbojet engine as claimed in one of claims 6 or 7, in which at least one of said deflector vanes has a hinge (29) about which said mobile panel (26) is articulated.
